# EUROPEAN PATENT APPLICATION

(11) **EP 4 024 810 A1**
(43) Date of publication of application: **06.07.2022**
(21) Application number: 21154470.5
(22) Date of filing: 31.01.2021
(51) Int. Cl.: H04L 29/06, H04L 9/32

(54) **TOKEN BASED PROTOCOL**

(30) Priority: 31.12.2020 EP 20315510
(71) Applicant: Medjaoui, Mahdi, 75003 Paris (FR)
(72) Inventor: MEDJAOUI, Mahdi, 75003 PARIS (FR); ARAB, Gawen, 75012 Paris (FR)
(74) Representative: Schuffenecker, Thierry

(57) **Abstract**

There are described systems and protocols, comprising user agents, clients, authorization servers and resource servers; wherein said user agents, clients, authorization servers and/or resource servers communicate through one or more tokens. Developments describe the use of computerized machine-readable contracts, claims and/or agreements; embodiments wherein a token is a document comprising a body and one or more signatures, said body comprising a plurality of tokens; embodiments wherein tokens or parts thereof are linked according to a K-ary tree or a directed acyclic graph; the use of hash trees presenting properties similar to a Merkle tree; embodiments wherein permissions rules can be further modified and/or access rights, or parts thereof, can be further delegated; human-readable data along machine-readable data; the use of linked timestamping and the use of stateless tokens.

## Description

### Technical field

The document provides examples of data and authorization management, and in particular of methods of handling access to data according to data privacy regulation frameworks.

### Background

Recent data regulation laws have placed the user at the center of the data ecosystem. Regulation frameworks around the world raise technical problems, which are tentatively solved by technical solutions. The requirement of improved personal data management for example requires *data portability* between platforms, particular data access management or data sharing and data compliance.

Known methods often use authorization tokens, mostly handled with Application Programming Interfaces (API). Other methods use file management. These technologies cannot ensure full traceability, enforceability, verifiability and revocability of data management contracts in a performant way, e.g. such as respecting current user experience requirements of response time below 300 milliseconds. Other methods can use cryptocurrency tokens, which also present limitations.

On the web nowadays, authorizations between platforms are generally handled with tokens, via APIs. Tokens are generally unique chains of randomized characters, also called *reference* tokens. Such tokens weigh a few bytes. According to some designs or architectures, authorization tokens can contain the information they provide, called *by value* tokens (for example JSON web tokens, acronym JWT). Such tokens enable to share access control, scopes and claims between applications via authorization protocols like OAuth, especially the OAuth2.0 framework.

In the context of the European General Data Protection Regulation (GDPR), existing technical solutions to handle compliant data management contracts present limitations, in particular with respect to enforceability, traceability and control by the user. Other regulation frameworks present similar limitations. Users often try to implement blockchain technologies (e.g. to sign, track, enforce and revoke authorization), which imply limitations as well.

### Summary of the invention

There are described systems and protocols, comprising user agents, clients, authorization servers and/or resource servers; wherein said user agents, clients, authorization servers and/or resource servers communicate through one or more tokens.

Developments describe the use of computerized machine-readable contracts, claims and/or agreements; embodiments wherein a token is a document comprising a body and one or more signatures, said body comprising a plurality of tokens; wherein tokens or parts thereof are linked according to a K-ary tree or a directed acyclic graph; the use of hash trees presenting properties similar to a Merkle tree; embodiments wherein permissions rules can be further modified and/or access rights, or parts thereof, can be further delegated; human-readable data along machine-readable data; the use of linked timestamping and the use of stateless tokens.

In an embodiment, the method comprises steps of signing, tracking, enforcing, verifying compliance, revoking data regulations contracts and/or managing data permissions in a decentralized way, using human and/or machine-readable interface contracts.

Advantageously, personal data regulation contracts are translated into computerized interface contracts, which can be both readable by a human and/or a machine.

Advantageously, properties inherited from Merkle tree structures can be leveraged for use in privacy protection regulatory frameworks. For example, as constructed, a document cannot be forged or otherwise falsified, a contract cannot be altered after signature, etc.

Advantageously, embodiments of the described decentralized architecture improves response times and performances.

Recursive embeddings combine replication of data (i.e. immediately available or data caching) and pointers to close and/or remotely accessible resources of stored data. If needed (e.g. by a legal inquiry), data can be provided (e.g. for legal proofs) but an excessive circulation of data is avoided.

Since tokens according to the invention can contain documents, they can contain the information of their own execution, enabling to transport data and execute contract(s) only where it needs to be, in a *"the medium is the message"* approach, This is a strong advantage in terms of decentralizing systems while keeping performance.

With respect to *storage*, and for example regarding the replication of data, there is some redundancy amongst involved parties but reduced to the necessary and sufficient amount. The described architecture optimizes storage of the global system. By contrast with centralized systems, there is no single point of failure. By contrast with highly distributed systems, the storage of data does not imply unnecessary replication, as contracts can be reconstructed if needed.

Regarding *processing*, the same advantages or technical effects can be observed (e.g. distribution of computation in an optimal way)

Decentralization according to the invention, gives *power to the user* (user agent and/or client). A given user can change authorizations having been given, at any time, without the need of justification. As the described protocol is the lowest level possible, there are no lock-ins of any kind. For example, there is no technological lock-in, as providers are free to change or substitute hardware as desired. There is no personal data lock-in, as a user can easily get data portability, gather his tokens and restart connections. According to the invention, a user agent and/or client can change one or more authorization servers, at will.

According to the described architecture, a user agent (web browser, representing a user) and/or client (e.g. vendor) can create and control their verifiable credentials, without being forced to request permission of an intermediary or centralized authority and to give control over how their personal data is shared and used. In the described decentralized architecture, the user is at the centre of the framework and there is no need for third parties to issue and administer an identity.

Depending on embodiments, human-to-human exchanges can be organized, but also machine-to-machine exchanges, along machine-to-human or human-to-machine messages. The Internet of Things indeed can raise privacy issues related to machines (e.g. indiscrete wristbands) and the described infrastructure can advantageously integrate such hybrid arrangements. In some embodiment, machine-to-machine exchanges can be handled. A machine can be a bot, a robot, an agent, an "A.I.", a logic circuit, a computer, a device, etc. For example, a device can access a trusted camera, which in turn may access other cameras to enable 3D scans given several perspectives, etc.

### Brief description of drawings

Embodiments of the present invention will now be described by way of example with reference to the accompanying drawings in which like references denote similar elements, and in which:
FIG. 1 illustrates an embodiment of the invention;
FIG. 2 shows an embodiment of a token according to the invention;
FIG. 3 shows an example of an embodiment of a token;
FIG. 4 provides a global perspective showing embodiments of the described protocol.

### Detailed description

A token is an object (in software and/or in hardware) which represents the right to perform some operation. A token according to the invention can comprise other types of tokens, for example an access token (a system object representing the subject of access control operations) and/or an invitation token (in an invitation system) and/or a security token and/or an authentication token or cryptographic token, and/or a session token (a unique identifier of an interaction session).

A communication protocol is a system of rules which allow two or more entities of a communications system to transmit information via any kind of variation of a physical quantity. The protocol defines the rules, syntax, semantics and synchronization of communication, and possible error recovery methods. Protocols are said to be to communication what algorithms are to computation.

The protocol according to the invention can be released in *open source.* To some extent, some data can be immutable: protocol parameters cannot be changed, altered or otherwise modified.

The protocol according to the invention describes *how the tokens are exchanged*, and what is a *valid* contract (e.g. which fields, which date, time rule e.g. no backdating, etc). It defines facts and /or rules which are not allowed (what is not "legal")

Regarding the structure of the network, different theoretical configurations can be found. First, the network can be centralized, with one center. The network can then be decentralized, comprising multiple centers. The network can be distributed, where nodes are interconnected (Internet). The network according to the invention is decentralized, with a plurality of centers, aka authorization servers. Some users can share the same authorization server.

Along the topology, contents can be replicated, or not. For example, the Bitcoin blockchain replicates contents multiple times. The network according to the invention does not (highly) replicate contents, but distributes them over the network, in circulating tokens.

There is described a system comprising: one or more user agents ; one or more clients; one or more authorization servers; one or more resource servers; wherein said one or more of said user agents and/or clients and/or authorization servers and/or resource servers communicate through, or via, or thanks to, or according to, one or more tokens; wherein an authorization server accesses processing and/or memory resources of one or more resource servers wherein an authorization server is configured to issue one or more of said tokens to one or more user agents and/or clients after successfully authenticating said one or more user agents and/or clients, and verifying (e.g. predefined or dynamically defined) permissions rules.

The topology of the network according to the invention can be one or more of a grid network, a mesh network, a web, a tree or an hypertree, or a combination thereof.

Advantageously, access permissions and storage of assets are decoupled.

Access tokens can be issued to third-party clients by an authorization server, with the approval of the user (user agents and/or clients). An access token can contain the security credentials for a login session, for example, and can identify the user, the user's groups, the user's privileges,

In an embodiment, authorization servers enable secure delegated access to server resources on behalf of a user (or agent). It can specify a process for resource servers to authorize third-party access to their server resources without sharing their credentials.

In an embodiment, authorization servers handle lists of permissions associated with objects. For example, an entry can specify a subject (e.g. Alice) and an operation (e.g. read, write).

In an embodiment, authorizations implement a role-based access control (restricting system access to authorized users). RBAC can implement mandatory access control (MAC) or discretionary access control (DAC). Role-based access control can define roles and privileges (role-permissions, user-role and role-role relationships can allow performing user assignments).

In a development, a token comprises one or more computerized machine-readable contracts, claims and/or agreements.

In an embodiment, a token comprises a plurality of logical rules applied on a plurality of facts. Logic implemented to handle contracts (as a set of logical rules applied on facts) can vary. In an embodiment, the logic applied to determine application of a contract is one or more of a binary logic, fuzzy logic, possibilistic logic, intuitionist logic, combinatorial logic, modal logic, propositional logic, polyvalent or multivalent logic, partial logic, or paraconsistent logic (one or more logics can be implemented).

Advantageously, classical logic can be used, but according to some embodiments, other types of logic can be implemented. Such embodiments can allow for increased flexibility. For example, fuzzy logic can be used.

In a development, a token is a document comprising a body and one or more signatures, said body comprising zero, one or more other tokens. In a development, a token or token body recursively comprises other tokens or token bodies.

In an embodiment, the system can comprise a token which is a document comprising a body and one or more signatures, said body encapsulation zero, one or more other tokens. To "encapsulate" means to "place in", to "summarize" or "condense".

In an embodiment, the body of a token A can comprise: a) interpretable or executable data e.g. code instructions ; b) a hash value of a token B for example "aaf4c61ddc"; c) one or more full and complete tokens e.g. a token C ; d) one or more pointers to data, e.g. a memory address 0x6dfed4. In an embodiment, a token according to the invention can comprise software and/or executable code instructions and/or pseudo-code.

For example, a vendor X proposes a contract which is not yet signed but which comprises the identity card of X. Auth Z provides the non-signed contract to a user Alice. The user Alice signs said contract. The signed contract then comprises the identity card of vendor X. The latter chain becomes the token: identity card of X // contract // signature of Alice.

In a development, tokens or parts thereof are linked according to a K-ary tree or a directed acyclic graph.

A tree is a widely used abstract data type that simulates a hierarchical tree structure, with a root value and subtrees of children with a parent node, represented as a set of linked nodes. A tree data structure can be defined recursively as a collection of nodes (starting at a root node), where each node is a data structure consisting of a value, together with a list of references to nodes (the "children"), with the constraints that no reference is duplicated, and none points to the root. A tree is an arborescence. An arborescence is the directed-graph form of a rooted tree. A rooted tree is a tree in which one vertex has been designated the root. A graph is formed by vertices and by edges connecting pairs of vertices, where the vertices can be any kind of object that is connected in pairs by edges. In the case of a directed graph, each edge has an orientation, from one vertex to another vertex.A directed acyclic graph is a directed graph that has no cycles.

In a directed acyclic graph, edges can represent causal relations between events.

In some other developments, links are structured according to one or more of a tree, a graph, a list, an array, a hypertree and/or an hypergraph. In mathematics, a hypergraph is a generalization of a graph in which an edge can join any number of vertices. Hypertrees can be chosen for parallel computer architecture. Hypergraphs can refer to combinatorial design, factor graph, greedoid, incidence structure, multigraph, P system or sparse matrix-vector multiplication

In some other developments, links are structured according to an undirected graph or a forest.

In a development, the K-ary tree comprises hash values forming a hash tree, said hash tree presenting properties similar to a Merkle tree.

A k-ary tree is a rooted tree in which each vertex has at most k children. In particular, a K-ary tree can be a binary tree with k=2. A binary tree is a tree data structure in which each node has at most two children, which are referred to as the left child and the right child.

Most hash tree implementations are binary (two child nodes under each node) but they can just as well use many more child nodes under each node.

The token is a document (for example a JSON) according to a tree structure, in which each node can be a root hash of children nodes forming a structure comparable to a Merkle tree.

In a development, one branch of the hash tree can be downloaded at a time and wherein the integrity of each branch can be checked immediately, even though the whole tree is not available yet.

Advantages are associated with such an embodiment: as the hash tree can contain all the previous information (e.g. being traversed), it becomes possible to verify a whole history of transactions with the latest transaction, or at least a part of it.

In a development, the hash function AH is such that for a node [X, Y, Z], AH([X,Y,Z])) equals AH([AH(X), AH(Y), AH(Z)])

A ⊕ B: A & B being byte arrays, returns the concatenation of A with B, being itself a byte array.

When X is a digest, AH(x) is the identity function;
When X is a bytes, AH(X) = H(b"bytes:" ⊕ X);
When X is a string, AH(X) = H(b"string:" ⊕ UTF8(X));
When X is a number, AH(X) = H(b"number:" ⊕ UTF8(F(X)));
When X is a boolean, AH(X) = H(b"boolean:" ⊕ B(X));
When X is a list, AH(X) = H(b"list:" ⊕ AH(X[1]) ⊕ AH(X[2]) ⊕ ... ⊕ AH(X[N])) wherein X[i] the i-th element in the list X, and wherein N is the count of elements in X.

When X is a map, be K[i] the i-th key in the map X. Be V[i] the i-th element in the map X. Be N the count of elements in X. K[i] can be sorted on ascendant AH(K[i]) as KS[i]. KS[i] therefore respects the two following properties: For any i, j exists so that K[i] = KS[j] and for any i and j, if i < j, then AH(KS[i]) < AH(KS[j]). VS[i] can be defined, which is the mapped value of KS[i]. For any i, j exists so that V[i] = VS[j] and K[i] = KS[j]. Following, a sorted representation of X (KS[i] and VS[i]), sorting being ascendant on the AH of the key.

AH(x) is defined as follows:
KH(X) = H(b"map:key:" ⊕ AH(KS[1]) ⊕ AH(KS[2]) ⊕ ... ⊕ AH(KS[N]))
VH(X) = H(b"map:value:" ⊕ AH(VS[1]) ⊕ AH(VS[2]) ⊕ ... ⊕ AH(VS[N]))
AH(X) = H(b"map:" ⊕ AH(KH(X)) ⊕ AH(VH(X)))

Noticeably, AH presents Merkle-tree properties.

For example: if NODE = [X, Y, Z], then AH(NODE) = AH([AH(X), AH(Y), AH(Z)]). Also AH([X, Y]) = H(b"list:" ⊕ AH(X) ⊕ AH(Y)) = AH([AH(X), AH(Y)])

By extension, there can be defined a signature S.

Be S a asymmetric signature scheme (e.g. Ed25519), with K a public key, SK a private key, SIGN: (digest, SK) -> signature the function to sign a digest given a secret key, VERIFY: (digest, signature, K) -> boolean the function which verifies if a digest had been signed with the secret key behind the public key. Be X a value of any type. Be N the current date encoded in string with RFC3339. To sign X, be A(X,N,K) as follow:
{ "value": X, "date": N, "signer": K, }

Be the S(X) the signed value X by SK as follows:
{ "value": X, "date": N, "signer": K, "signature": SIGN(AH(A(X,N,K)), SK),}

To verify S(X) had been signed by SK,
VERIFY(AH(A(X, N, K), S(X).signature, K) must be true.

As an associated advantage, such a development brings the possibility to hash parts of the documents, to keep some parts in clear and obfuscate only parts of the data in the document.

This leads to many advantages for public ledgers. If and when a document contains sensitive data, it can be shared in a way that keeps clear data for fast verification by humans or machines, while not revealing sensitive data; all of this while keeping the same hash of the document. It enables better readability and verification while not changing the hash of the document.

In a development, permissions rules can be further modified and/or access rights, or parts thereof, can be further delegated.

For example, one party can delegate, in part or entirely one or more permissions (e.g. read, write privileges, allowing further access, modification, export, etc).

In a development, a token comprises a computerized machine-readable contract as the body of said token, the enforcement thereof being executed at every connection, access and authorization.

The enforcement can be matched at every connection, access and authorization. If the contract clauses are not met, the token expires automatically and the authorization is not granted. If one of the clauses is not respected, the contract is not enforced and the system gives back an unauthorized error message.

Using computerized machine-readable contracts as a body of the token advantageously enables tokens to contain the information to be executed locally, and also to be executable programmatically by another program, in an automated way. This reproduces the ability of self-executing contracts of *smart contracts*, but without the need of a blockchain.

In a development, a token comprises human-readable data, wherein human-readable data is processed by one or more of Natural Language Processing system, an expert system, a neural network embodying a model trained by machine learning, and/or an artificial intelligence comprising one or more software programs.

Auditability can be key for contract law, human judgement, but to some extent can be processed as being natural language. In particular, access to human-readable data in a token can be conditional to predefined access rights.

In an embodiment, JSON contracts can be formed in a way that respects current regulations requirements and also enables easy to read user interface, that increases the understanding of users of what they sign. In other words, auditability of a contract is advantageously improved. Audibility can be conditional to predefined access rights

For legal contracts, some parts *must* stay human-readable to be more easily understood by the humans involved in the legal process. The ability of tokens to comprise human-readable allows readability for humans who are part of the legal decision. As signatures shall be stored along signed contracts (confer the segregated witness debate for crypto-currencies), non-technical requirements (legal or regulatory requirement) can be handled in a technical way, by involving machines for interpretation.

The effect is technical, in that it allows natural language processing algorithms to handle the data which is not in computer-readable or interpretable form.

In a development, the user agents, clients and/or authorization servers are synchronized through a shared clock e.g. Network Time Protocol.

The Network Time Protocol (NTP) is a networking protocol for clock synchronization between computer systems over packet-switched, variable-latency data networks. For example, a token can be time-stamped (with the UTC clock) with the date of a signature.

In a development, linked timestamping can be used. Linked timestamping uses timestamps which are dependent on each other, entangled in an authenticated data structure. Later modification of the issued time-stamps would invalidate this structure.

Linked timestamping is a type of trusted timestamping where issued time-stamps are related to each other. The temporal order of issued time-stamps is protected, making backdating of the issued time-stamps impossible, even by the issuing server itself. The top of the authenticated data structure is generally published for example in some public blockchain. There are no private keys in use, avoiding related risks.

In a development, trusted timestamping is used. In a development, trustless timestamping is used.

In a development, a machine-readable contract is granted by signing and time-stamping said contract.

Revocation can be handled as tokens are time-stamped and list(s) of parties can be reconstructed. In an embodiment, an old permission can be modified, one or more clauses can be revoked (for example a Boolean associated with automated processing which was set to "true" can now be set to "false"). In such a case, there will be a new second grant. In an embodiment, different tokens are handled. In an embodiment, grants are linked with one another (which allows to analyze the genealogy of the token). In an embodiment, to revoke a grant, a new grant is signed with the field "revoked" set to "true". All involved parties can be therefore informed: the latest revoking grant overrules all previous ones.

In a development, a resource server is configured to check the integrity of the token by checking the integrity of the contract under its jurisdiction and decide whether or not to grant access to the resource.

In a development, a token is stateless.

In an embodiment, the token according to the invention is stateless, it can be interpreted in isolation, without context information from previous messages in the session. Existing tokens are lightweight (a few data fields). By contrast, a token according to the invention can weigh up to several megabytes, if not gigabytes or more.

In an embodiment, at a given moment a token can be stateful: a walk of the tree associated with said token can allow interpreting said token.

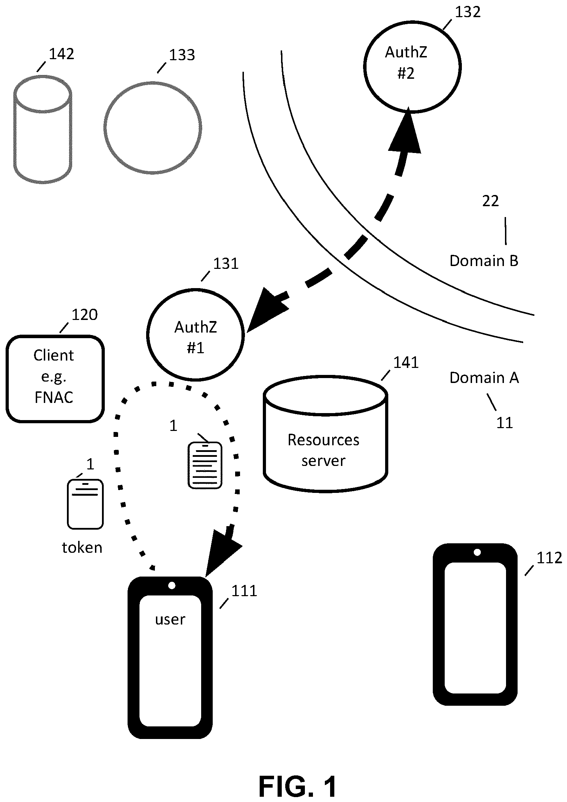

FIG. 1 illustrates an embodiment of the invention.

Four entities are shown: a user (agent) 111 (e.g. the web browser of a user), a client application 121 (e.g. Vendor), an authorization server 131, and a storage of assets called resource server 141 (e.g. Service provider, NAS, etc). Other instances are shown (e.g. authorization server 132 and 133, resource server 142, etc).

The user 111 or 112 for example can be a human user under a data regulation jurisdiction. In some embodiments, the entity can be a machine. The client application 121 can be a third-party application requesting access data to the user storage server. The authorization server 131 is a server managing the signature of data regulations contracts between a user and a client application. The resource server 141 is a storage server accessible via a HTTP endpoint or other services (web services etc.)

An authorization server 131 is part of the decentralized network according to the invention, identified by its IP address or its web domain (there can be several web domains, for example web domain A 11 and web domain B 22). The authorization server presents the contract between two parties, a user 111 and a client application or client 121.

The user 111 will sign the contract embedded in a token 1 with its private key and the authorization server will create a (by value) token 1 with a header, a body and a footer comprising signatures, in a human and/or machine-readable format, like JSON for example. The particularity of this token 1 is that its body is a machine-readable legal contract, that is compliant with data regulations jurisdiction, and which is manageable programmatically (e.g. searchable, modifiable and revocable).

The client application 121 will get the access token 1 from 131 enabling it to request resource to the resource server 141 according to the legal contract. The resource server will check the integrity of the token 1 by checking the integrity of the legal contract under its jurisdiction and decide whether or not to grant access to the resource.

Contrary to classic OAuth schemes where the relation between the authorization server and resource server is stateful, in the context of the invention, the relationship of the authorization server and resource server here can be stateless. This enables the resource server to be behind any domain and interact with the authorization server behind any domain too, promising true decentralization of authorization and permission management.

For example, vendor X proposes a contract which is not yet signed but which comprises the identity card of X. Auth Z provides the non-signed contract to a user Alice. The user Alice signs said contract. The signed contract then comprises the identity card of vendor X. The latter chain becomes the token: identity card of X // contract // signature of Alice.

Storage may be parsimonious. Vendor X may store only the signature of Alice. Alice may store the identity of vendor X, the contract having been signed. The content parts of a token indeed can be distributed over parties to this token (user agent, client, authorization server and resource server). Each party can replicate i.e. store the entirety of the content, but in some cases, a party can store data it has direct interest for.

Alice, X and Z have the corresponding token or parts thereof. If two parties fail, for example Alice and X, Z might have the full data stored, or not, to reinstate the token. If all three (user agent, client and authorization) fail, the information disappears.

In practice, all parties (A, X and Z) keep a copy of the entire token.

### Authorization servers

The verb to authorize means to give authority to or for, to establish by authority or usage, to afford a ground for, to warrant, or to justify. To authorize means to give official permission for something to happen, or to give someone official permission to do something.

The authority associated with an authorization server comes from the fact that one or more users trust said authorization server. As an individual chooses a notary public.

The protocol can be released in open source and/or in binary code (e.g. combining the best of both worlds: parts in clear for development speed and bug bounty, along security by obscurity for some other parts).

In an embodiment, any node or user can create or choose its authorization server.

A web domain can be protected by a public key. An authorization server can be protected by a public key. An authorization server authenticates by its associated public key and web domain.

A first web domain can request a token, a second web domain can deliver the authorization and can communicate said token.

A (unique) IP address can be used instead of, or as, a web domain. An IP address can be used to contact an authorization server.

A pair [{Web domain OR IP address}, public key] represents an entity e.g. authorization server in the protocol.

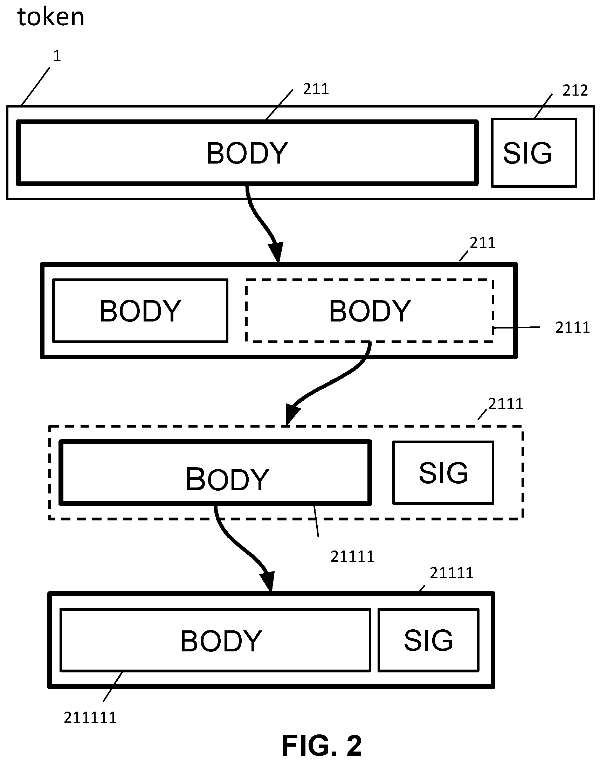

FIG. 2 shows an embodiment of a token according to the invention.

A token 1 comprises a header (not shown, optional), a body 210 and one or more signatures 212 (only one token is represented, but there are many tokens circulating in the network).

In computer science, a token is an object which represents the right to perform some operation(s). Tokens can be associated with different purposes (e.g. access, invitation, security, authentication, cryptographic, session). A token is generally made of a short sequence of characters. OAuth tokens are generally random value chains called *"tokens by reference".*

In the example, the body 211 comprises a plurality of bodies. One of these bodies 2111 can be "opened" or "scrutinized" or otherwise analysed. It comprises another body 21111 which in turn provides a body 211111. Doing so, a token can comprise multiple embedded bodies. A token is thus a tree.

### JSON Web Tokens (JWT)

In an embodiment, which is entirely optional, a token can be structured like a JSON Web Token and/or can comprise one or more JSON Web Tokens.

Such an embodiment is fully optional. The system according to the invention does not use such format or structure. Nevertheless, it can be advantageous in terms of ease of implementation, or for interoperability purposes. In other words, JWTs can be easy to use by/for developers. Industrial applications can be facilitated.

A JavaScript Object Notation (JSON) is an open standard file format, and data interchange format, which uses human-readable text to store and transmit data objects consisting of attribute-value pairs and array data types (or any other serializable value). It can serve as a replacement for XML. JSON is a language-independent data format.

A token according to the invention is a JSON which recursively comprises documents and signatures. In other words, a token according to the invention is a JWT which recursively comprises JWTs. A token is thus a *tree* comprising JWTs.

A JWT is a JSON which is signed. By contrast, a token according to the invention is a JSON document, in which any part can be hashed (or ciphered, or signed). In other words, a JSON document is recast in the form of a Merkle tree. This can be advantageous for legal purposes, for example for compliance with European GDPR requirements, or similar regulations..

### Token body: hash values and/or pointers

A hash (value) serves the purpose of authentication, or integrity check. It is not understandable *per se*, but it can be used to verify properties. By design, a piece of information can be identified by a hash, but the very content cannot be reconstructed from said hash.

Hash trees are a generalization of hash lists and hash chains. A hash tree, or Merkle tree, is a tree in which every leaf node is labelled with the cryptographic hash of a data block, and every non-leaf node is labelled with the cryptographic hash of the labels of its child nodes. Demonstrating that a leaf node is a part of a given binary hash tree requires computing a number of hashes proportional to the logarithm of the number of leaf nodes of the tree. A cryptographic hash function such as SHA-1, SHA-2 or SHA-3 can be used for the hashing. A branch of the hash tree can be downloaded at a time and the integrity of each branch can be checked immediately, even though the whole tree is not available yet.

A tree can be authenticated. A transmitter transmits Yi to the receiver. The transmitter then transmits the authentication path for Yi. The receiver knows R, the root of the authentication tree, and so can then authenticate Yi, and can accept as genuine a message from the transmitter signed with the corresponding Xi.

A piece of information in a list of information, or one item in a list of items, can be authenticated.

A pointer is an object that stores a memory address. A pointer is a piece of information comprising at least an address of a stored asset.

In such an embodiment, a party cannot alter the integrity of the token. If required by applicable law for example, the integrity of a token can be verified.

In other words, considering a given token according to the invention, its integrity can be checked in part or in whole.

In the described protocol, tokens are public. Yet these tokens can comprise protected parts, of different nature.

In an embodiment, one or more tokens, or parts thereof, can be ciphered. Parts of a token can be ciphered when the rest can be accessible in clear). For example, the body can be ciphered, while other parts can stand in clear (i.e. human and/or machine understandable). In an embodiment, one or more tokens (or parts thereof) are ciphered and others stand in clear. Advantageously, in such a mix, secret or otherwise delicate parts of one or more contracts can be protected, while other parts can be auditable (by anyone in the network).

In an embodiment, one or more tokens are obfuscated (obfuscation means that at least some content of the token, for example the body, is *not immediately* accessible). Obfuscation is the deliberate act of creating source or machine code that is difficult for humans and/or machines to read. Advantages of obfuscation comprise faster loading time, reduced memory usage, protection of secrets, prevention of circumvention, etc.

In an embodiment, one or more tokens or parts thereof are ciphered and/or obfuscated. Obfuscation and ciphering can be additive (a data block can be ciphered then obfuscated, or the opposite).

In an embodiment, one or more tokens can comprise hidden data (e.g. steganographic data, hidden fields or functions, etc). This can be unintentional (e.g. an image comprising messages), malevolent or on-purpose (for security reasons e.g. backdoor, or flaws or warrant canary, etc)

In an embodiment, all tokens are in clear (this allows for a transparent network). A token in clear can still comprise hash values (which serve authentication verifications)

### Token / Sub token

From a token which comprises multiple rights, a sub-token may be created with limited rights for a third party. For example, such third-party may have an interest in some data fields only. The token also can incorporate new information, for example 2221.

### Signatures

A token e.g. 1 according to the invention is signed by parties to the contract. When handling a given token, one can know who signed the token, who authored which part etc. A signature proves that a document has been considered as valid - thus has been trusted - by the associated party.

It can be assumed that each party participating in the network is defending its interest.

In an embodiment, each node proactively can sign a token he receives.

For example, a vendor X creates its identity in the protocol: first string. The second string is the contract which is not signed, with a reference to the identity of X. The third string is the signature of the contract and the access is granted to the postal address of Alice. The chain of strings is a token.

Security according to the protocol can be based on encryption and/or hash values along the presence of clear contents.

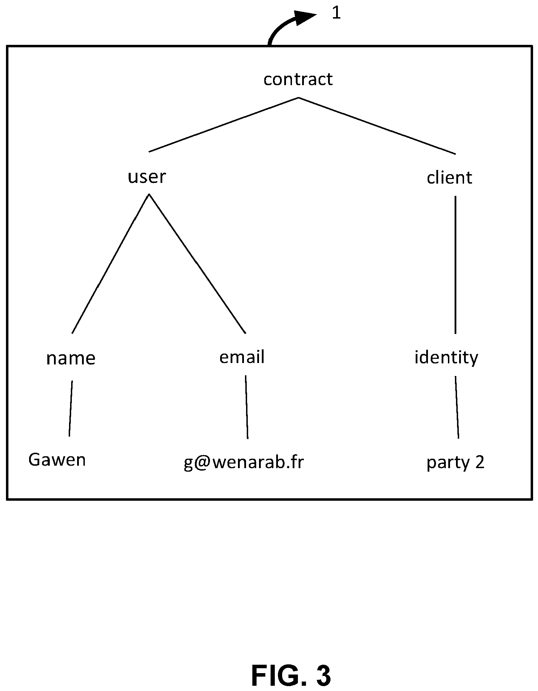

FIG. 3 shows an example of an embodiment of a token.

According to an embodiment, a token is a tree. A contract can comprise a user, the user is associated with a first name, the first name is Gawen. A contract comprises a user, which comprises an email.

This tree can be managed as a Merkle tree.

A token can encapsulate (i.e. condense) or comprise (e.g. entirely) one or more tokens, hierarchically ranked. A token according to the invention is signed. The body can comprise arbitrary data or other tokens. It is recursive.

In an embodiment, a token comprises a plurality of parts composed of subcomponents.

In an embodiment, a first part can advantageously be designed to present to the user the main elements of the contract he is signing, for example composed as: 1) the legal base of the jurisdiction, 2) the scope of the data from the resource, explained in plain text and in a machine-readable nomenclature. By contrast with an OAuth authorization windows, the client application can request different sources of data from different providers, in the same time, enabling the user to share them in only one contract instead of one each; 3) a purpose of use to know for what the data may be used; and d) a duration of use to know up to when the data will be not accessible anymore.

In an embodiment, the contract can be composed of a second part of elements about describing more detailed elements like: 4) destination in applications and companies where the data can be shared; 5) location where the data will be hosted; 7) ih the data is for profiling or not; 7) original use of the data in innovative way; 8) important links to consider.

In an embodiment, subcomponents can comprise diverse types of data, legal bases of which the data is collected, purpose of use of the data, duration of the data storage, etc.

Some facts or data can be stored as Boolean choices between alternatives. The contract can comprise different clauses. A clause can comprise "If the data will/will not be transferred outside the European Economic Area" (value true or false). A clause can comprise "If the data will/will not be used for evaluation, notation, rating, or for profiling activities" (value true or false). A clause can comprise "If the data will/will not be used to generate an automated decision about users" (value true or false). A clause can comprise "If the data will/will not be used for automated surveillance" (value true or false). A clause can comprise "If the data will/will not be crossed or mixed with others beyond reasonable expectations that the user should know" (value true or false). A clause can comprise "If the data will/will not be used in an innovative way, or from innovative technologies or innovative organizational systems beyond reasonable expectations of the user" (value true or false).

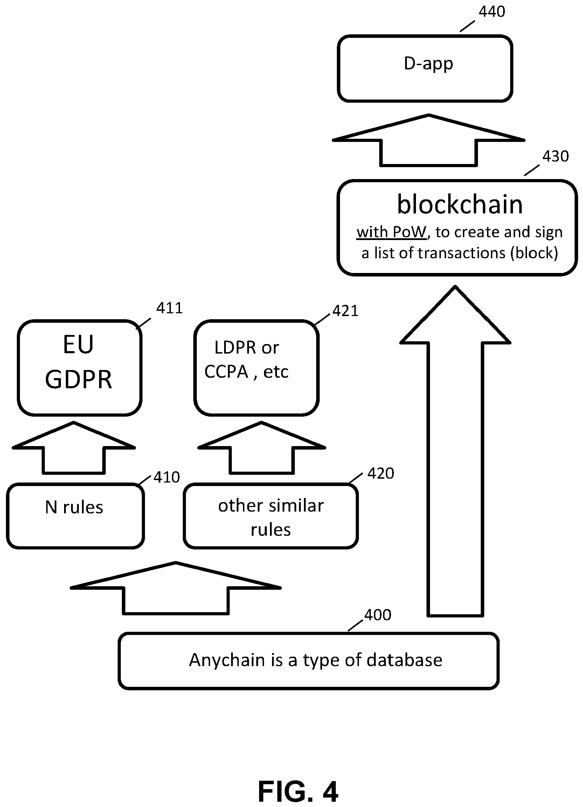

FIG. 4 provides a global perspective showing embodiments of the described protocol.

As described, the protocol (handling of tokens) 400, called "anychain" is a type of decentralized database. The protocol 400 allows building blockchains 430 providing distributed apps 440, but the opposite statement is false.

The system 400 as described comprises legal parameters 410 internalizing one or more data privacy regulation frameworks, e.g. GDPR or LGDR, in Canada, or in California.

A set of logical rules 410 indeed reduces the scope of the *anychain* infrastructure: for example, they implement the European GDPR. In an embodiment, these rules specify what documents are to be signed (the list of documents whose signatures are required), which document cites which document, the principle that documents cannot be anti/back dated. Other similar rules 420 can implement other legal regulations (e.g. LDPR, CCPA).

In an embodiment, a user (agent) declares a server as an authorization server by signing a computerized contract. A client is associated with a plurality of attributes, comprising name, domain and public key. This client writes a contract template. The user accepts or not clauses of the contract (for example allowing automated processing). The user agent can declare a given server as an authorization server. The client can propose a contract to the user. The user can accept at least parts of the contract and otherwise complete choices. In an embodiment, the contract specifies a plurality of clauses, e.g. the "contractual" part, the "consent" part and the "legitimate" part, along with the description of what the user accepts and does not accept in the contract. The user signs the client's contract with the user's key, and thereby grants the contract.

In the preceding example, clauses are specific to EU GDPR (i.e. legal basis, consent, goal or purpose, profiling, duration, territory, geography, etc). GDPR indeed requires any organization processing personal data to have a valid legal basis for that processing activity. The law provides six legal bases for processing: consent, performance of a contract, a legitimate interest, a vital interest, a legal requirement, and a public interest. GDPR also defines Lawfulness, fairness and transparency; purpose limitation; data minimization; accuracy; storage limitation; integrity and confidentiality (security).

Other embodiments are now described.

In an embodiment, an exchange of currency or cryptocurrency token appears substantially at the same time of an authorization grant between two servers of the network.

In an embodiment, upon an agreement between one or more parties (e.g. user agents, clients, authorization server and/or resource server), a cryptocurrency token is created.

In an embodiment, transactions can occur in the (network) system according to the invention. Transactions can comprise the handling of flat currency amounts and/or cryptocurrency tokens (or fractions thereof). A token can comprise one or more transactions and/or one or more cryptocurrency tokens.

In an embodiment, a bot - or a botnet as a collection of bots - is able to crawl the history of a token, on an authorization server and/or a resource server, to detect available fields of data and request associated access(es) or to perform other actions (e.g. analytics or leveraging detected data, etc).

In an embodiment, the history of a token is analyzed to detect specific fields of data and upon detection a request access is emitted. The analysis can comprise a plurality of tree walks, network crawls (e.g. for resources), and associated requests, in order to reconstitute parts or the entirety of the token. In an embodiment, an authorization server does the latter when said token is received for example. In an embodiment, a resource server is performing the analysis. In an embodiment, a resource server and an authorization server cooperate to perform the analysis. In an embodiment, a software agent, or bot, or botnet (collection of bots) intercepts said token (as it is communication from one endpoint to another).

In an embodiment, a user agent is a human user. In an embodiment, user agents are software programs or machines. In an embodiment, a user agent is embodying Application Programming Interfaces. In an embodiment, a user agent is a connected device.

In an embodiment, any hash of the K-ary tree can be stored in a (software and/or hardware) ledger, or in a shared ledger, or in/on/by a crypto ledger or blockchain, or on paper (cold storage)

In an embodiment, the relationship between authorizations servers and resource servers is stateless (i.e. both entities can comprise information which when added can comprise necessary and sufficient information).

In an embodiment, permissions rules are predefined. In an embodiment, permissions rules are dynamic (e.g. programmable).

In an embodiment, initial permissions and/or access rights (for example of an initial token) can be modified, changed or otherwise derived into modified permissions.

A (parent) token can generate (or be generated or transformed or derived e.g. split, divided, recopied, etc) into one or more sub-tokens or children tokens. Token of generation N can allow fine-grained permissions and/or access rights.

In an embodiment, a token can be associated or modified with attenuation, delegation, and contextual confinement.

In an embodiment, permissions and/or access rights can be reproduced at identical (same scope). In an embodiment, permissions and/or access rights can be restricted or limited or confined (limitation within predefined parameters). In an embodiment, permissions and/or access rights can be contextualized (e.g. parametric rights can be assessed or otherwise determined).

Diverse entities can act or otherwise regulate tokens. In an embodiment, tokens can be self-regulating (the management rules are dictated by/in the protocol, or embedded in tokens themselves). In an embodiment, authorization servers regulate tokens. They can do the latter in cooperation but also adversarial (conflicts occurring between independent parties can be solved by third party arbitrage). In an embodiment, resource servers compete with authorization servers, or otherwise can complement the latter (e.g. cooperation).

In an embodiment, the requests authorized by a token is unlimited. In an embodiment, the number of requests is capped.

In an embodiment, one or more tokens can be enriched, enhanced or otherwise improved. For example a token can be sophisticated or specified to rule that additional steps are required, for example with respect to authentication, authorization, and/or audit. For example, a token can be modified in order to check network time (e.g. at predefined intervals), or to authenticate against or before identity providers. Other required actions or steps of operations comprise: encryption, translate, transcode, process, execute, hash, annotate, condense, extend, reduce, read, write, publish, reshare, solve, simulate, etc.

In an embodiment, a token can be associated with one or more priority levels (e.g. QoS purposes).

In an embodiment, a token can be associated with one or more parameters or conditions (e.g. territorial location, geolocation, legal jurisdiction).

In an embodiment, a token can be subject to algorithmic auditing and/or provenance tracking.

In an embodiment, a token can be required to pass tests or scans (e.g. by antivirus engines, by DoS-prevention and/or risk analysis services)

In an embodiment, a token can support decentralized delegation.
in an embodiment, tokens can handle decentralized cryptographic authorization credentials. In an embodiment, tokens can embed caveats that attenuate and contextually confine when, where, by who, and for what purpose a target service should authorize requests.

In an embodiment, tokens can enable fine-grained authorizations, for example for rendered services (e.g. communication channels, execution environments, and implementations)

In an embodiment, tokens can be bearer tokens which can authorize access for unregistered users agents and/or clients.

In an embodiment, precise restrictions can define how, where, and when credentials embedded in a token can be used.

In an embodiment, a token can be limited in what objects and what actions it permits.

In an embodiment, a token can require additional evidence, such as third-party signatures.

In an embodiment, a token can restrict when, from where, or in what other observable context it can be used.

In an embodiment, a token require proof that the requests have been audited and approved by an abuse-detection service,

In an embodiment, a token can be required to prove it comes from a specific device with a particular authenticated user.

In an embodiment, a token can require cascaded proxy certificates, and/or restricted delegation and/or active certificates and/or proof-carrying authentication.

In an embodiment, a token can be associated with TTL (time-to-live) or hop limit, which is a mechanism that limits the lifespan or lifetime of data. TTL may be implemented as a counter or timestamp attached to or embedded in the data. Once the prescribed event count or timespan has elapsed, data is discarded or revalidated. In an embodiment, a token may live only for seconds, and may be split or constrained in any manner.

In an embodiment, a token can implement one or more (logical) rules. A rule can be location-based. A rule can be locked, conditionally authorized (depending on the context, requiring payment, etc.). A rule can be free, require payment or can be installed for free with advanced features and/or settings requiring a payment.

In an embodiment, a token delegates its privileges and/or permissions and/or access rights and/or capabilities via a minted token.

In an embodiment, a transaction or an exchange of currency or cryptocurrency token can occur substantially at the same time of an authorization grant.

In an embodiment, one or more tokens and associated data in authorization servers and/or resource servers is query-able, and/or a software agent or a bot is able to crawl and/or to index one or more tokens or the associated content thereof.

In an embodiment, one or more tokens (and associated data in authorization servers and/or resource servers) is queryable and/or crawlable and/or indexable.

The expression "A and/or B" means "A" or "B" or "A and B". When lists of elements are provided, it is intended that-even if forgotten i.e. not explicitly mentioned-, combinations of such elements are possible. The expression "and/or" is generally applicable to this entire document; for example a sentence such as "the device can comprise element A, element B and element C" should be interpreted as "the device can comprise element A and/or element B and/or element C", i.e. the device comprises "A and B and C", or "A and B", or "A and C", or "B and C", "A", or "B", or "C".

A plurality of "incentives to combine" is now provided.

It is suggested to combine any of the presently described embodiments with one another.

It is also suggested to combine described embodiments or combinations thereof with one or more of the following techniques or technologies or concepts or ideas or paradigms or the like: affiliate (a token can comprise an affiliate link, or an URL or URI of any MIME type); alert (a token can comprise one or more alert or warning or caveat: for example, if a domain is hacked, then all corresponding tokens may be revoked); analytics (e.g. tokens can be gathered as big data and analytics can be derived thereof); autonomous (a token can take its own initiatives, programmatically e.g. with a collection of combined rules); anonymous (e.g. for anonymous browsing, a single-use encryption key or ephemeral key can be used); authentication (e.g. two-factor); bandwidth (a token can be associated with bandwidth priorities); Bayesian inference (a token can implement such logic, or any type of machine learning); searchable (in an embodiment, tokens can be searchable and searched, or queryable) ; biometric (a token can be associated with biometry data); torrent (tokens can comprise torrent mechanisms, e.g. seed/leech etc); broker (an authorization token can act as a data broker); captcha (a token can implement or be associated with a Turing test or captcha, for example at token creation); DRM (a token can implement DRM mechanisms, which for example can include technical measures of protection to prevent circumvention, or other types of limitation in space and/or time); class (tokens can be categorized in classes or types, be subject to different operations such as verification, replication or the like); computationally-secure (tokens can be computationally-secure, some can require proof of work); confidentiality or data compression; cookie (a token can comprise one or more cookies); connected (e.g. tokens can be interconnected, over time); controllability (a token can present control points, for example in clear, e.g. kill switch); cost-per-click (a token can implement payment mechanisms, or any value-based transactions e.g. coupons or perks); countermeasure (a token can comprise one or more countermeasures to defeat computer security attacks; token are natively secured but active processes can be taken as active defense); crowdsourcing (a token can convey crowdsourcing mechanisms, e.g. votes or scoring, see Distributed Autonomous Organization); regulation (e.g. some tokens can act as super tokens, or master tokens, or admin tokens, e.g. upstream or regulators' tokens can regulate downstream tokens; for example discovery or legal tokens, performing inquiries by national authorities); ephemeral (a token can be kept valid during tens of a second only); daemon (by opposite, some tokens can be rendered non-deletable, reinstated if deleted or otherwise modified); error-correcting code (a token can implement such ECC mechanisms, for example in transport layer or in the content of the token); email (user identifiers can comprise an email, public keys, namespace and domain); granularity (tokens can have diverse granularity of rights); hardened (a token can be hardened, to resist crypto-analysis, reverse engineering); homomorphic (a token can use homomorphic encryption); hypervisor (a token can comprise a container or Virtual Machine, possibly an hypervisor); implanted (a token can be used in a device implanted in a mammal body, as prosthesis or orthosis, or otherwise worn e.g. a ring or strap, etc); information-theoretically secure (a token can be or implement information-theoretically secure mechanisms); interactive (a token can implement programmable interactivity); interoperable (tokens can be natively or rendered interoperable); LDPC-code (a token can implement LDPC-code or turbo codes); long-term security (a token can implement post-quantum encryption e.g. one time pad); onion routing (tokens can be subjects to onion routing); paywall (a token can use one or more paywalls or payment mechanisms); persistence (a token can be resilient, i.e. self-repair if damaged or modified); proof-of-work (a token can require a proof-of-work, proof of stake, proof of ownership etc.); PUF (a token can be linked to an Physically Unclonable Function for authentication purposes); pull-push mechanism, pubsub, event-driven (publications of tokens can use such mechanisms); QKD (a token can use Quantum Key Distribution); replicator (a type of token can consist in replicating other tokens); reputation (a user's token and/or servers can be associated with one or more reputation scores); RSS (tokens may be published as/in RSS or Atom or as streams or by any messaging system including social networks); secured boot (tokens can be used for secure-boot of programs, in trusted computing environments); smart contract (a token can comprise and/or consume one or more so-called "smart contracts" hosted on blockchain(s), or a "smart contract" can comprise and/or consume one or more tokens); steganographic (a token may comprise hidden data); transaction (a token can record one or more transactions); watermark (a token can comprise a watermark); and zero-knowledge protocol or proof (a token can implement such mechanisms).

The present invention can be implemented from hardware and/or software elements. It may be available as a computer program product on a computer-readable medium. The medium may be electronic, magnetic, optical or electromagnetic.

The computing means or resources may be centralized and/or distributed ("Cloud computing"), possibly with or according to peer-to-peer and/or virtualization and/or redundancy technologies. The software code may be executed on any appropriate processor (e.g. a microprocessor) or processor core or set of processors, whether provided in a single computing device or distributed among several computing devices. The computer implementation of the invention may use centralized systems (e.g. client-server or master-slave) and/or distributed systems (e.g. peer-to-peer architecture using accessible computing resources, possibly in an opportunistic manner e.g. ad hoc network, etc.).

The system (or its variants) implementing one or more of the process steps may use one or more dedicated electronic circuits or a general-purpose circuit. The process may also be implemented on a reprogrammable computing machine (e.g. a processor or microcontroller) running a program comprising a sequence of instructions, or on a dedicated computing machine (e.g. a set of logic gates such as an FPGA or ASIC, or any other hardware module). In particular, a dedicated circuit can accelerate performance. As an example of a hardware architecture adapted to implement the invention, a device may comprise a communication bus to which are connected a central processing unit (CPU), which processor may be "multi-core" or "many-core"; a read-only memory (ROM) which may contain the programs necessary for the implementation of the invention; a random access memory (RAM) comprising registers adapted to record variables and parameters created and modified during the execution of the aforementioned programs; and a communication interface or I/O (Input/output) adapted to transmit and receive data.

In the case where the invention is implemented on a reprogrammable computing machine, the corresponding program (i.e. the sequence of instructions) may be stored in or on a removable storage medium (e.g. flash memory, SD card), a mass storage medium such as a hard disk e.g. SSD) or non-removable, volatile or non-volatile, such storage medium being readable partially or totally by a computer or processor.

Reference to a computer program that, when executed, performs any of the functions described above is not limited to an application program running on a single host computer. Rather, the terms computer program and software are used here in a general sense to refer to any type of computer code (e.g., application software, firmware, microcode, or any other form of computer instruction) that can be used to program one or more processors to perform process steps.

## Claims

1. A system comprising:
- one or more user agents (e.g. 111,112) ;
- one or more clients (e.g. 121, 122);
- one or more authorization servers (e.g. 131, 132);
- one or more resource servers (e.g. 141, 142);
wherein said one or more of said user agents (e.g. 111,112), clients (e.g. 121, 122), authorization servers (e.g. 131, 132) and/or resource servers (e.g. 141, 142) communicate through one or more tokens;
wherein an authorization server (141) accesses processing and/or memory resources of one or more resource servers (141);
wherein an authorization server (141) is configured to issue one or more of said tokens (1) to one or more user agents (e.g. 111,112) and/or clients (e.g. 121, 122) after authenticating said one or more user agents (e.g. 111,112) and/or clients (e.g. 121, 122), and verifying permissions rules.

2. The method of Claim 1, wherein a token comprises one or more computerized machine-readable contracts, claims and/or agreements.

3. The system of claim 1, wherein a token is a document comprising a body and one or more signatures, said body comprising zero, one or more other tokens.

4. The system of claim 3, wherein tokens or parts thereof are linked according to a K-ary tree or a directed acyclic graph.

5. The system of Claim 4, wherein the K-ary tree comprises hash values forming a hash tree, said hash tree presenting properties similar to a Merkle tree.

6. The system of Claim 5, wherein one branch of the hash tree can be downloaded at a time and wherein the integrity of each branch can be checked immediately, even though the whole tree is not available yet.

7. The system of Claim 5, wherein the hash function AH is such that for a node [X, Y, Z], AH([X,Y,Z])) equals AH([AH(X), AH(Y), AH(Z)])

8. The system of any preceding claim, wherein permissions rules can be further modified and/or access rights, or parts thereof, can be further delegated in full or with limitation, attenuation, contextual and/or confined scope.

9. The system of any preceding claim, wherein a token comprises a computerized machine-readable contract as the body of said token, the enforcement thereof being executed at every connection, access and authorization.

10. The system of any preceding claim, wherein a token comprises human-readable data, wherein human-readable data is processed by one or more of natural language processing system, an expert system, a neural network embodying a model trained by machine learning, and/or an artificial intelligence comprising one or more software programs.

11. The system of any preceding claim, wherein said user agents, clients and/or authorization servers are synchronized through a shared clock e.g. Network Time Protocol.

12. The system of any preceding claim, wherein linked timestamping is used.

13. The system of any preceding claim, wherein a machine-readable contract is granted by signing and time-stamping said contract.

14. The system of any preceding claim, wherein a resource server is configured to check the integrity of the token by checking the integrity of a contract under its applicable jurisdiction and determine whether or not to grant access to a resource of the resource server.

15. The system of any preceding claim, wherein a transaction or an exchange of currency or cryptocurrency token occurs substantially at the same time of an authorization grant.

16. The system of any preceding claim, wherein one or more tokens and associated data in authorization servers and/or resource servers is queryable, and/or wherein a software agent ot a bot is able to crawl and/or to index one or more tokens or the associated content thereof.
